# NEUE EUROPÄISCHE PATENTSCHRIFT

(11) **EP 2 181 834 B2**
(45) Veröffentlichungstag und Bekanntmachung des Hinweises auf die Entscheidung über den Einspruch: **16.11.2016**
(45) Hinweis auf die Patenterteilung: 19.09.2012
(21) Anmeldenummer: 09173751.0
(22) Anmeldetag: 22.10.2009
(51) Int. Cl.: B29C 70/44, B29C 70/54, B29L 31/08

(54) **Verfahren zur Herstellung eines Rotorblattgurts**
Method for manufacturing a rotor blade spar cap
Procédé pour la fabrication d'une semelle de longeron d'une pale d'éolienne

(30) Priorität: 04.11.2008 DE 102008055771
(43) Veröffentlichungstag der Anmeldung: 05.05.2010
(73) Patentinhaber: Senvion GmbH, 22297 Hamburg (DE)
(72) Erfinder: Eyb, Enno, 24118 Kiel (DE)
(74) Vertreter: Seemann & Partner Patentanwälte mbB

(56) Entgegenhaltungen:
- EP-A1- 0 525 263
- WO-A1-03/008800
- WO-A1-2006/058540
- WO-A1-2007/098769
- WO-A1-2009/003477
- DE-A1- 10 140 166
- DE-A1- 19 926 896
- DE-C1- 10 203 975
- FR-A1- 2 828 131
- US-A1- 2007 090 562
- US-A1- 2007 090 562
- US-A1- 2007 145 622

## Beschreibung

Die Erfindung betrifft ein Verfahren zum Herstellen eines faserverstärkten Gurts eines Rotorblatts einer Windenergieanlage aus einem trockenen Fasermaterial.

Es ist bekannt, dass Rotorblätter von Windenergieanlagen eine Schale aufweisen, wobei die Schale paarweise gegenüberliegend angeordnete Gurte aufweist, wobei zwischen den Gurten Stege vorgesehen sind, so dass der Profilquerschnitt der Schalen gegen Biegung in Schlagrichtung versteift ist. Insbesondere bestehen die Gurte aus in Längsrichtung faserverstärkten Kunststoffen. Die sehr leichte Schale derartiger Rotorblätter weist nur eine geringe Eigensteifigkeit auf und ist daher durch die anlaminierten Gurte verstärkt, die über die wesentliche Länge des Rotorblatts laufen und mit in Längsrichtung laufenden Fasern für die Aufnahme solcher Zug- und Druckkräfte ausgebildet sind.

Biegekräfte am Rotorblatt treten insbesondere durch Windbelastung in Schlagrichtung auf, also in Richtung senkrecht zur Umlaufebene des Blattes. Dabei verbiegt sich ein Rotorblatt an jeder Stelle bevorzugt in Richtung senkrecht zu seiner Profilsehne, also der Linie, die in einer quer zur Längserstreckung des Rotorblatts stehenden Querschnittsebene von der verrundeten Blattnase bis zum dünn auslaufenden hinteren Ende verläuft.

Die Hauptgurte des Rotorblatts sind symmetrisch zur Profilsehne gegenüberliegend angeordnet und mit als längsverlaufende Wände ausgebildeten Stegen zwischen diesen Gurten ausgestützt. Sie bilden somit ein ausgesteiftes Tragprofilrohr hoher Biegesteifigkeit in Richtung quer zur Profilsehne des Rotorblatts. Außerdem können Nebengurte auch in der Profilnase und/oder der Profilhinterkante angeordnet sein.

Biegesteifigkeit in Schlagrichtung ist für Rotorblätter von wesentlicher Bedeutung. Dadurch wird unter anderem vermieden, dass ein Rotorblatt bei hoher Belastung gegen den Turm der Windenergieanlage schlagen kann. Ferner muss erreicht werden, dass die Biegesteifigkeit des Rotorblatts so hoch ist, dass die Eigenfrequenz des Rotorblatts, die im Wesentlichen proportional von der Steifigkeit und umgekehrt proportional von der Masse abhängt, bei im Betrieb auftretenden Drehzahlen des Rotors nicht angeregt wird.

Weiterhin ist bekannt, dass Rotorblätter üblicherweise Gurte mit Glasfaserverstärkung oder Kohlenfaserverstärkung aufweisen. Die Glasfaserverstärkung ist kostengünstig, hat jedoch eine geringe Steifigkeit und ein hohes Gewicht im Vergleich zu Kohlenfaserverstärkung.

Überdies ist im Stand der Technik bekannt, dass die faserverstärkten Gurte von Rotorblättern unter Verwendung von HarzInfusionsverfahren hergestellt werden.

Darüber hinaus ist aus DE 100 13 409 C1 ein Verfahren zur Herstellung von faserverstärkten Kunststoff-Bauteilen aus trockenen Faserverbund-Halbzeugen mittels eines Injektionsverfahrens zur Injektion von Matrixmaterial bekannt. Weiterhin offenbart DE 602 16 108 C2 ein Verfahren zum Bilden von faserverstärkten Kunststoffstrukturen.

Weiterhin offenbart WO-A-2007/038930 ein Verfahren zum Herstellen eines faserverstärkten Produktes unter Verwendung des Harz-Infusionsverfahrens (RTM, Resin Transfer Molding).

US-A-2007/0090562 offenbart ein Harzinfusionsverfahren, wobei das Harz zuerst durch eine Fliesshilfe strömt, bevor es zu der Faserverstärkung gelangt.

Ausgehend von diesem Stand der Technik besteht die Aufgabe der vorliegenden Erfindung darin, ein Verfahren zur Herstellung eines Gurtes eines Rotorblatts bzw. einen Gurt bereitzustellen, wobei der fertig hergestellte Gurt auf einfache Weise herzustellen sein und der Gurt definierte Ränder haben soll.

Gelöst wird die Aufgabe durch ein Verfahren zum Herstellen eines faserverstärkten Gurts eines Rotorblatts einer Windenergieanlage aus einem trockenen Fasermaterial, wobei
- das Fasermaterial in einer Vertiefung einer Form auf einer Fließhilfe angeordnet wird oder ist,
- die Vertiefung auf der Oberseite gegen die äußere Umgebung mittels einer Abdeckung abgedichtet wird oder ist, wobei der abgedichtete Innenraum unter Vakuum gesetzt wird oder ist,
- auf der Oberseite des trockenen Fasermaterials Harz an wenigstens einer Stelle an einem Harzanguss auf der oberen Seite des Fasermaterials in das Fasermaterial direkt gegeben wird, so dass das Harz unmittelbar aus dem Harzanguss in das Fasermaterial eintritt, wobei das Harz über einen oder mehrere in dem Fasermaterial ausgebildeten Kanäle gegeben wird, so dass über den oder die Kanäle das Harz zur Fließhilfe geleitet wird, und das in das Fasermaterial gegebene Harz zur unter dem Fasermaterial angeordneten Fließhilfe bei angelegtem Vakuum im Innenraum fließt.

Die Erfindung beruht auf dem Gedanken, dass zwischen dem Harzanguss auf der Oberseite des Fasermaterials, das bevorzugterweise aus Endlosfasern (Rovings) oder unidirektionalen Gelegen gebildet wird, und dem als Fließhilfe ausgebildeten Verteilmediums unterhalb des Fasermaterials kein Kontakt besteht, so dass das Fasermaterial über die unterseitige Fließhilfe von unten infundiert wird, wobei die Fließgeschwindigkeit des Harzes nach Abgabe nach unten in Richtung der Fließhilfe derart hoch ist, dass das abgegebene Harz nach unten zur Fließhilfe fließt und nicht direkt zu den seitlich neben der Abgabestelle des Harzes angeordneten Saugstellen für das Vakuum gelangt.

Die Anordnung wird hierzu geometrisch so ausgebildet, dass der Fließwiderstand durch das Fasermaterial zur Fließhilfe deutlich geringer ist als zu den seitlich angeordneten Saugstellen, z.B. in dem der seitliche Abstand der Saugstellen zum Angusspunkt größer gewählt wird oder ist als der Abstand zwischen Angusspunkt und Fließhilfe. Hierdurch wird gewährleistet, dass der Weg des Harzes vom Angusspunkt nach unten durch das Fasermaterial ausgebildet ist. Anschließend wird das in der Fließhilfe aufgenommene Harz in die Länge und in die Breite, d.h. nach außen, geführt, wobei aufgrund des im Innenraum ausgebildeten Unterdrucks das verteilte Harz das Fasermaterial von unten nach oben durchtränkt.

Durch das Verteilmedium bzw. die Fließhilfe unter dem Fasermaterial bzw. dem Gurt ist das Harz unten schneller auf dem Weg zu den Rändern als oben, wodurch gewährleistet wird, dass die unteren Gurtlagen des Fasermaterials über die gesamte Breite injiziert werden, bevor das Harz zu der Vakuumstelle gelangt. Das Harz verteilt sich somit zunächst relativ schnell durch das untere Fließmedium über die gesamte Breite und durchdringt anschließend das aus Verstärkungsfasern bestehende Gurtmaterial dann von unten nach oben, wodurch auch der oder die Randbereiche des Fasermaterials in den äußeren Bereichen bzw. glatten Kantenbereichen vom Harz durchtränkt werden. An der Stelle auf der Oberseite des Fasermaterials, an der das Vakuum aus dem Innenraum gezogen wird, ist bevorzugterweise das Fasermaterial von einer gas- und luftdurchlässigen, bevorzugterweise mikroporösen oder semipermeablen, Membran bedeckt, wodurch Gas und Luft ungehindert durch die Membran permeieren, und gleichzeitig das Harz von der Membran zurückgehalten wird und im Fasermaterial verbleibt.

Ein großer Vorteil besteht in einer sehr einfachen Gestaltung der Form, die weder Harz-Kanäle noch Vakuum-Kanäle aufweist bzw. aufweisen muss. Mittels der einseitig angeordneten Fließhilfe an der Unterseite des Fasermaterials wird das Harz von der Empfangsstelle, an der das vom Harzangusspunkt eingegebene Harz in die Fließhilfe abgegeben wird, nach außen zu den Randbereichen des anfangs noch trockenen Fasermaterials bzw. von der Empfangsstelle weg geleitet, so dass das Harz unter Verwendung der Fließhilfe verteilt wird bzw. ist.

Überdies wird das Harz am Harzanguss bzw. Harzangusspunkt auf der der Fließhilfe abgewandten, oberen Seite des Fasermaterials direkt in das trockene Fasermaterial, d.h. ohne Verwendung von Verteilhilfen oder ohne Verwendung von Fließhilfen an der Oberseite des Fasermaterial, gegeben, so dass an der Eingabeseite bzw. Angusspunkt das Harz aus dem Harzangusspunkt unmittelbar in das Fasermaterial eintritt. Hierdurch entsteht am oberseitigen Harzangusspunkt keine induzierte Verbreiterung des Bereichs des Harzangusses, da das abgegebene Harz nicht verteilt wird, bevor es durch das Fasermaterial zu der unterseitigen Fließhilfe gelangt, da an der Oberseite zwischen dem Harzanguss und dem Fasermaterial keine Verteilhilfen, Verteilmedien oder Verteilschichten oder dergleichen zur Verteilung von Harz an der Oberseite des Fasermaterials bzw. an der Eingabeseite des Harzes vorgesehen sind.

Die weiteren Verfahrensschritte zur Herstellung des Verfahrens wie z.B. Bereitstellen eines Unterdrucks für das Durchtränken des Fasermaterials mit Harz, Aushärten etc. erfolgen auf per se bekannte Weise. Das Beaufschlagen des Fasermaterials mit Unterdruck bzw. mit einem Vakuum erfolgt dabei vor der Injektion des Harzes.

Überdies wird gemäß einer weiteren Ausgestaltung des Verfahrens vorgeschlagen, dass das mit Harz zu versehende bzw. durchtränkende (zuerst) trockene Fasermaterial mit Vakuum mittels von wenigstens einer oder mehreren Vakuum-Saugvorrichtungen, die an einer der Fließhilfe abgewandten Seite des Fasermaterials, vorzugsweise an den Saugstellen, angeordnet sind, beaufschlagt wird.

Insbesondere wird das Vakuum über wenigstens eine semipermeable Membran in oder an der Abdeckung im Innenraum angelegt bzw. abgezogen.

Erfindungsgemäß wird dabei ein faserverstärkter Gurt in einer Form mit definierten Formrändern gefertigt, wobei der hergestellte Gurt aufgrund des erfindungsgemäßen Prozesses definierte Ränder aufweist, da auch Harz über das untere Verteilmedium bzw. die untere Fließhilfe in die Randbereiche des Fasermaterials verteilt wird bzw. fließt. Gemäß den bisherigen Herstellungsprozessen von Gurten von Rotorblättern wurden Gurte hergestellt, die nach der Herstellung undefinierte Ränder aufwiesen oder wobei der Gurt gesondert beschalt und besäumt werden musste. D.h. die Beschalung, i.d.R. aus Holz, wurde abgesägt.

Demgegenüber ist erfindungsgemäß eine Einschalung und Besäumung des Gurtes nicht erforderlich, da der fertige Gurt aus der Gurtform bzw. der Vertiefung nach der Aushärtung entnommen wird und anschließend direkt, d.h. ohne weitere Bearbeitungsschritte in die Rotorblattschale eingelegt wird.

Gemäss der Erfindung wird das Harz über einen oder mehrere in dem Fasermaterial ausgebildete Kanäle gegeben, so dass über den oder die, insbesondere senkrechten, Kanäle das Harz zur unterseitigen Fließhilfe geleitet wird. Hierdurch wird ebenfalls erreicht, dass das Harz zunächst schnell über die nach unten gerichteten Kanäle auf das untere Verteilmedium bzw. Fließmedium oder die untere Fließhilfe gegeben wird, so dass anschließend das Harz über die gesamte Breite der unteren Fließhilfe verteilt wird.

Darüber hinaus zeichnet sich das Verfahren dadurch aus, dass das Harz mittels der unterseitigen Fließhilfe zur Seite verteilt wird, so dass der oder die Randbereiche des Fasermaterials vom Harz durchtränkt werden.

Überdies ist es in einer bevorzugten Ausführungsform vorteilhaft, dass zwischen zwei, vorzugsweise mit jeweils semipermeablen Membranen ausgebildeten, Saugstellen in der Abdeckung Harz über den Harzanguss in das Fasermaterial gegeben wird. Hierbei wird das Harz über den Harzanguss auf der Oberseite abgegeben.

Ein weiterer Verfahrensschritt zeichnet sich dadurch aus, dass Harz über den Harzanguss in das Fasermaterial neben wenigstens einer vom Harzanguss beabstandeten, vorzugsweise mit jeweils einer semipermeablen Membran ausgebildeten, Saugstelle auf derselben Seite des Harzangusses gegeben wird, wobei insbesondere das auf und/oder in das Fasermaterial gegebene Harz zur unter dem Fasermaterial angeordneten Fließhilfe bei angelegtem Vakuum fließt und anschließend nachfolgend in Richtung der wenigstens einen Saugstelle verteilt wird, so dass das Fasermaterial im Bereich zwischen Harzanguss und der wenigstens einen Saugstelle vom Harz durchtränkt wird.

Durch das erfindungsgemäße Verfahren wird erreicht, dass der hergestellte Gurt aufgrund der, bevorzugterweise im Querschnitt rechteckigen, Form definierte gerade Kanten an den Rändern aufweist, die während des Herstellungsprozesses aufgrund der unterseitigen Fließhilfe vom Harz durchtränkt werden. Bevorzugterweise ist dabei zwischen der unteren Fließhilfe und dem faserigen Gurtmaterial zusätzlich ein Abreißgewebe und/oder eine Lochfolie unter dem Abreißgewebe ausgebildet, so dass das Verteilmedium bzw. die unterseitige Fließhilfe nach der Entformung des hergestellten Gurts entfernt wird, wodurch die Fließhilfe nicht im Gurt verbleibt. Erfindungsgemäß werden die unteren Gurtlagen mittels der unterseitigen, mit Harz getränkten Fließhilfe über die gesamte Breite infundiert, bevor das Harz die auf der Oberseite angeordnete Membran bzw. Membranen an der Saugstelle in der oberseitigen Abdeckung benetzt, wodurch die Injektion des Fasermaterials gestoppt wird.

Bevorzugterweise ist an der Saugstelle in der oberseitigen Abdeckung auf der Vakuumseite der Membran, d.h. auf der dem Fasermaterial abgewandten Seite der Membran ein Vakuumfließ oder eine Vakuumhilfe angeordnet, wodurch sich im Innenraum der abgedichteten Vertiefung der Form, in der das Fasermaterial angeordnet ist, ein gleichmäßiges Vakuum ausbildet und eine günstige Vakuumverteilung während der gesamten Verfahrensdauer bei angelegtem Unterdruck bereitgestellt wird.

Nachfolgend wird die Erfindung anhand eines Ausführungsbeispiels exemplarisch und ohne Beschränkung des allgemeinen Erfindungsgedankens beschrieben, wobei bezüglich aller im Text nicht näher erläuterten erfindungsgemäßen Einzelheiten ausdrücklich auf die schematischen Zeichnungen verwiesen wird. Es zeigen:
- Fig. 1: eine schematische Frontansicht auf eine Windenergieanlage,
- Fig. 2: eine schematische Seitenansicht der Windenergieanlage der Fig. 1,
- Fig. 3: eine schematische Schnittdarstellung eines Rotorblatts der Windenergieanlage der Figuren 1 und 2 im Schnitt der Linie 3-3 in Fig. 4
- Fig. 4: einen Schnitt nach Linie 4-4 in Fig. 3;
- Fig. 5: einen schematischen Querschnitt durch eine Anordnung zum Herstellen eines Rotorblatts und
- Fig. 6: eine vergrößerte schematische Detailansicht der Anordnung aus Fig. 5.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

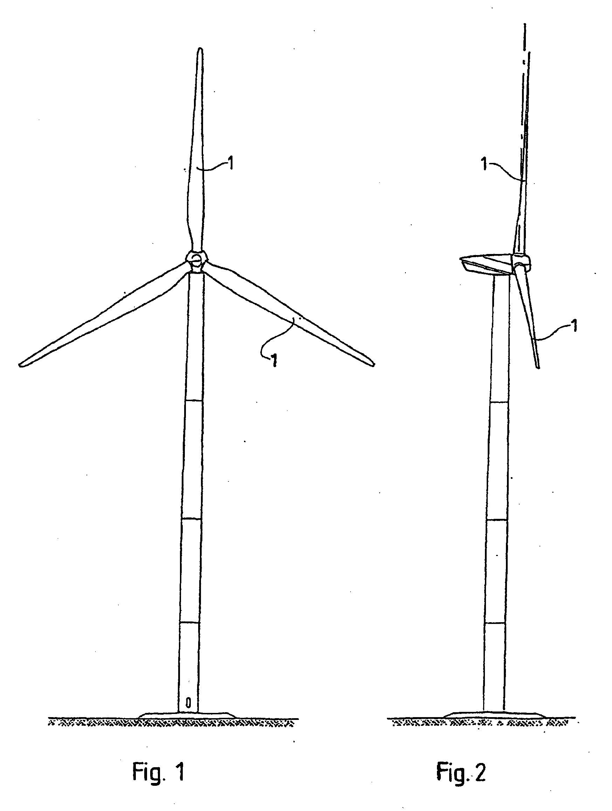

Figuren 1 und 2 zeigen schematisch Ansichten in Richtung der Rotorachse bzw. quer dazu eine Windenergieanlage mit einem auf einem Boden aufgestellten Turm, an dessen Spitze eine drehbare Gondel einen um eine im Wesentlichen waagerechte Achse umlaufenden Rotor trägt, der aus drei Rotorblättern 1 besteht. Im dargestellten Ausführungsbeispiel einer Windenergieanlage im Leistungsbereich einiger Megawatt liegt die Länge der Rotorblätter 1 typischerweise zwischen 40 m bis 60 m.

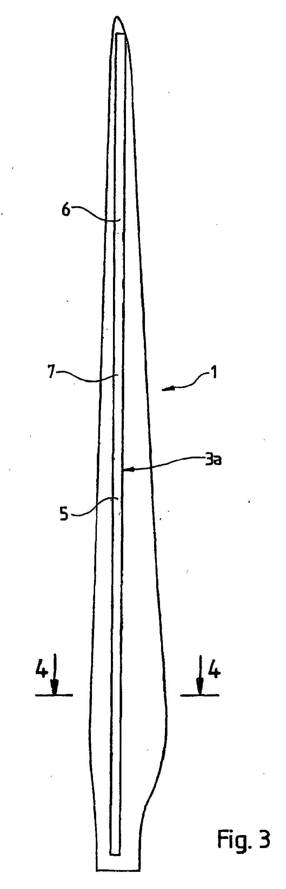

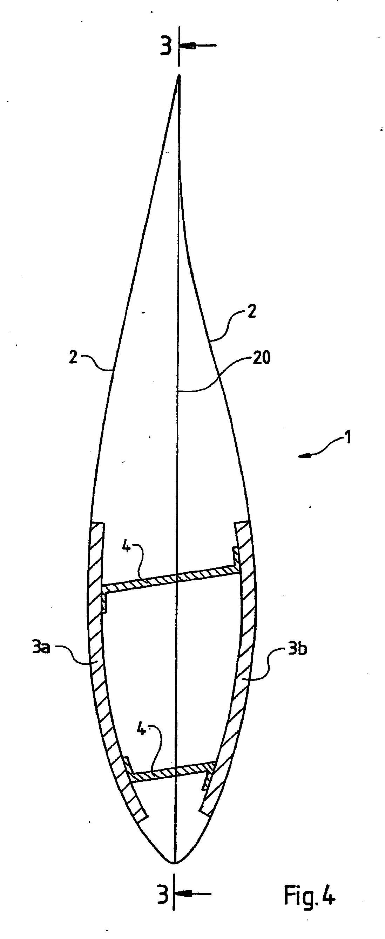

Die Schnittdarstellung der Figuren 3 und 4 zeigen den inneren Aufbau eines Rotorblatts 1 mit einer relativ dünnen Schale 2, die üblicherweise aus glasfaserverstärktem Kunststoff besteht und die auf der Innenseite, und zwar auf den in Richtung der Rotordrehachse vorn und hinten liegenden Flächen je einen anlaminierten Gurt 3a, 3b trägt. Bevorzugterweise kann die Schale 2 als Sandwich-Konstruktion ausgebildet sein.

Die Gurte 3a und 3b sind im Ausführungsbeispiel mit im Wesentlichen identischem Querschnitt ausgebildet. Anstelle jedes der Gurte 3a, 3b, wie in der Ausführungsform dargestellt, können auch mehrere parallele Gurte in schmalerer Ausbildung vorgesehen sein.

Wie Fig. 4 zeigt, sind zwischen zwei Gurten 3a und 3b Stege 4 vorgesehen, die als über die Länge des Gurtes durchgehende, ausgesteifte, flächige Platten ausgebildet sind. Mit den Gurten 3a und 3b und den Stegen 4 ergibt sich ein in Richtung senkrecht zur Zeichnungsebene der Fig. 3, also senkrecht zu der in Fig. 4 dargestellten Profilsehne 20 biegesteifes Profil.

Wie Fig. 3 zeigt, verlaufen die Gurte 3a, 3b in Längsrichtung des Blattes. In ganzer Länge ist jeder der Gurte 3a, 3b aus faserverstärktem Kunststoff mit in Längsrichtung des Gurtes, d.h. unidirektional verlaufenden Verstärkungsfasern ausgebildet. Bevorzugterweise bestehen die Gurte 3a, 3b aus Glasfasern und/oder Karbonfasern.

Wie aus Fig. 4 hervorgeht, weisen die dargestellten Gurte 3a, 3b eine wesentlich größere Breite als Höhe auf. Bei einem typischen Rotorblatt in einer Länge von etwa 40 m weist der Gurt eine Breite von ca. 60 cm und eine Höhe im Bereich von etwa 5 cm auf. Die Gurte 3a, 3b beginnen soweit wie möglich innen an der Rotornabe und verlaufen zur Vereinfachung der Fertigung mit konstanter Breite über die Spitze des Rotorblatts. Die Anpassung des Gurtquerschnittes an die jeweils auftretenden, aufzunehmenden Kräfte erfolgt durch Höhenänderung. Im Allgemeinen kann dabei der Gurtquerschnitt, d. h. die Höhe, von innen nach außen abnehmen.

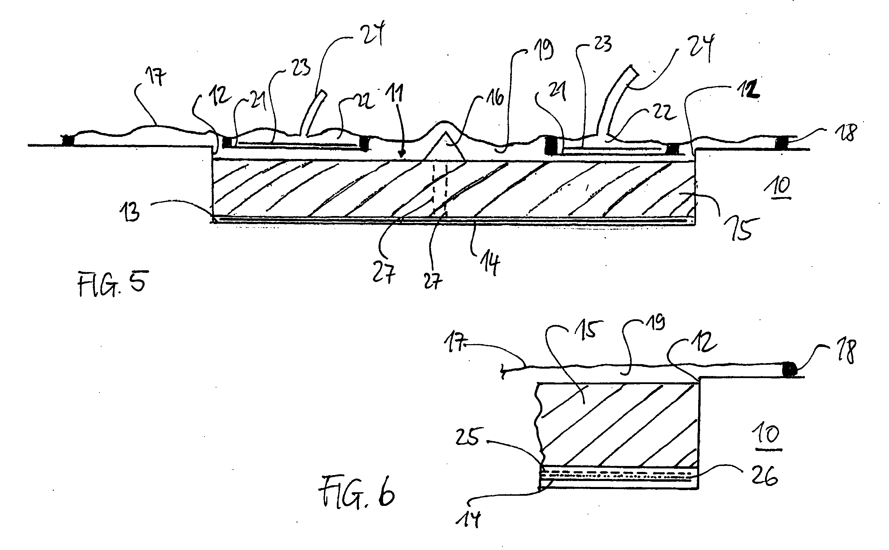

Fig. 5 zeigt in einer schematischen Ansicht eine Einrichtung bzw. Anordnung zum Herstellen eines Gurtes eines Rotorblatts 1 einer Windenergieanlage. Hierbei verfügt die Einrichtung über eine Form 10, die eine muldenartige Vertiefung 11 aufweist. Die Vertiefung 11 ist vorzugsweise im Querschnitt rechteckig ausgebildet, wobei die Vertiefung 11 durch senkrechte Wände 12 und einen waagerechten Boden 13 ausgebildet ist. In der Praxis weist der Boden über die Länge des Gurts eine Verwindung von etwa 10° bis 15° auf und ist gewölbt.

Oberhalb des Bodens 13 ist eine Fließhilfe 14 über die gesamte Breite der Vertiefung bzw. des Bodens 13 ausgelegt bzw. angeordnet. Oberhalb der Fließhilfe 14 ist ein Bündel von Fasern 15, bevorzugterweise Glasfasern, eingebracht, die vorzugsweise als unidirektionale Gelege ausgebildet sind.

Über bzw. auf den Fasern 15 ist in der Mitte ein Harzanguss 16 angeordnet. Die Vertiefung 11 bzw. die Fasern 15 werden von einer Abdeckung 17 abgedeckt, wobei die Abdeckung 17 an ihren Rändern Abdichtungen 18 aufweist, die einen dadurch den gebildeten Innenraum 19 luftdicht abschließen.

Seitlich neben dem Harzanguss 16 sind über den Fasern 15 im Randbereich der Vertiefung 11 zwei Membranen 21 angeordnet, wobei zwischen den Membranen 21 und der Abdeckung 17 jeweils ein Zwischenraum 22 gebildet wird, die jeweils an eine Unterdruckquelle bzw. eine Vakuumpumpe über einen Vakuumanschluss 24 angeschlossen sind, so dass ein Vakuum sowohl im Zwischenraum 22 als auch im Innenraum 19 unterhalb der Abdeckung 17 entsteht.

Über den Harzanguss 16 wird Harz auf die Fasern 15 gegeben, wobei das abgegebene Harz zu der Fließhilfe 14 an der Unterseite der Fasern 15 fließt. Hierbei wird das Harz am Harzanguss 16 unmittelbar, d.h. ohne Zwischenschaltung bzw. ohne Verwendung eines Verteilmediums oder dergleichen zwischen dem Harzanguss 16 und den Fasern 15 an der Oberseite in die Fasern 15 eingegeben.

Über die als Verteilermedium ausgebildete Fließhilfe 14 wird das aufgenommene Harz seitlich nach außen zu den Rändern geführt und verteilt. Dabei ist der von der Abdeckung 17 eingeschlossene Innenraum 19 unter Vakuum gesetzt, so dass die Luft im Innenraum 17 durch die semipermeablen Membranen 21 hindurchgeleitet wird, während das Harz zurückgehalten wird und die Membran 21 benetzt, wodurch die Injektion der Fasern 15 mit Harz gestoppt wird.

Dadurch, dass das über die untere Fließhilfe 14 verteilte Harz in die Randbereiche des Bündels der Fasern 15 geführt wird und aufgrund des Druckgefälles, so dass das Harz an den äußeren Enden der Fließhilfe 14 mit einer Fließrichtung an den Randbereichen von unten nach oben die Fasern 15 durchtränkt wird, wird erreicht, dass auch die Ränder der Fasern 15 vollständig von Harz infundiert werden, wodurch nach Aushärtung der vom Harz durchtränkten Fasern 15 die Fasern 15 eine definierte Kante des hergestellten Gurtes an den seitlichen Wänden 12 haben.

Zur Unterstützung eines gleichmäßigen Vakuums im Innenraum ist vorteilhafterweise oberhalb der Membranen im Zwischenraum 22 eine Luftverteilhilfe 23 ausgebildet, wodurch ein gleichmäßiges Vakuum im von der Abdeckung 17 begrenzten Raum ausgebildet wird. Die Luftverteilungshilfe 23 und die Fließhilfe 14 können ökonomisch vorteilhaft aus dem gleichen Material bestehen.

Außerdem ist es in einer Ausgestaltung möglich, dass das von dem Harzanguss 16 abgegebene Harz über Kanäle 27, die in Fig. 5 durch Striche angedeutet sind, zur unterseitigen Fließhilfe 14 fließt. Besonders vorteilhaft sind die Kanäle 27 aus einem geschlitzten bzw. porösen Material (z.B. Schaum, Balsaholz, ...) ausgebildet.

Alternativ zur symmetrischen Anordnung gemäß Fig. 5 können der Harzanguss 16 auch an der einen Seite der Oberseite und die Saugstellen mit der semipermeablen Membran 21 an der anderen Seite der Oberseite des Fasermaterials 15 angeordnet sein, so dass der Harzfortschritt nicht von der Mitte über die Unterseite zu den Rändern sondern von dem einen Rand über die Unterseite zu dem anderen Rand erfolgt.

In Fig. 6 ist eine Detailansicht aus Fig. 5 eines Randbereiches im Ausschnitt gezeigt, aus der hervorgeht, dass unter den Fasern 15 sowie zwischen der Fließhilfe 14 und den Fasern 15 ein Abreißgewebe 25 und eine Lochfolie 26 unter dem Abreißgewebe 25 angeordnet sind. Nach Aushärtung der Fasern 15 werden durch Entfernung des Abreißgewebes 25 auch die beiden anderen Lagen, Lochfolie 26 und Fließhilfe 14 von dem aus dem faserverstärkten Material hergestellten Gurt entfernt, wodurch das Gewicht des Gurtes reduziert wird. Optional kann auch über die Fasern 15 ein Abreißgewebe 25 angeordnet sein, also auf der der Abdeckung 17 zugewandten Seite des Gurts.

### Bezugszeichenliste

- 1: Rotorblatt
- 2: Schale
- 3a, 3b: Gurt
- 4: Steg
- 10: Form
- 11: Vertiefung
- 12: Wand
- 13: Boden
- 14: Fließhilfe
- 15: Fasern
- 16: Harzanguss
- 17: Abdeckung
- 18: Abdichtung
- 19: Innenraum
- 20: Profilsehne
- 21: Membran
- 22: Zwischenraum
- 23: Luftverteilhilfe
- 24: Vakuumanschluss
- 25: Abreißgewebe
- 26: Lochfolie
- 27: Kanal

## Patentansprüche

1. Verfahren zum Herstellen eines faserverstärkten Gurts (3a, 3b) eines Rotorblatts (1) einer Windenergieanlage aus einem trockenen Fasermaterial (15), wobei
- das Fasermaterial (15) in einer Vertiefung (11) einer Form (10) auf einer Fließhilfe (14) angeordnet wird oder ist,
- die Vertiefung (11) auf der Oberseite gegen die äußere Umgebung mittels einer Abdeckung (17) abgedichtet wird oder ist, wobei der abgedichtete Innenraum (19) unter Vakuum gesetzt wird oder ist,
- auf der Oberseite des trockenen Fasermaterials (15) Harz an wenigstens einer Stelle an einem Harzanguss (16) auf der oberen Seite des Fasermaterials (15) in das Fasermaterial (15) direkt gegeben wird, so dass das Harz unmittelbar aus dem Harzanguss (16) in das Fasermaterial (15) eintritt, wobei das Harz über einen oder mehrere in dem Fasermaterial (15) ausgebildete Kanäle (27) gegeben wird, so dass über den oder die Kanäle (27) das Harz zur Fließhilfe (14) geleitet wird, und das in das Fasermaterial (15) gegebene Harz zur unter dem Fasermaterial (15) angeordneten Fließhilfe (14) bei angelegtem Vakuum im Innenraum (19) fließt.

2. Verfahren nach Anspruch 1, **dadurch gekennzeichnet, dass** das, vorzugsweise trockene, Fasermaterial (15) mit Vakuum mittels von wenigstens einer oder mehreren Vakuum-Saugvorrichtungen, die an einer der Fließhilfe (14) abgewandten Seite des Fasermaterials (15) angeordnet sind, beaufschlagt wird.

3. Verfahren nach Anspruch 1 oder 2, **dadurch gekennzeichnet, dass** das Vakuum über wenigstens eine semipermeable Membran (21) in der oder an der Abdeckung (17) im Innenraum (19) angelegt wird.

4. Verfahren nach einem der Ansprüche 1 bis 3, **dadurch gekennzeichnet, dass** das Harz mittels einer unterseitigen Fließhilfe (14) zur Seite verteilt wird, so dass der oder die Randbereiche des Fasermaterials (15) vom Harz durchtränkt werden.

5. Verfahren nach einem der Ansprüche 1 bis 4, **dadurch gekennzeichnet, dass** Harz über den Harzanguss (16) in das Fasermaterial (15) neben wenigstens einer vom Harzanguss (15) beabstandeten, vorzugsweise mit jeweils semipermeablen Membranen (21) ausgebildeten, Saugstelle auf derselben Seite des Harzangusses (16) gegeben wird, wobei insbesondere das in das Fasermaterial (15) gegebene Harz zur unter dem Fasermaterial (15) angeordneten Fließhilfe (14) bei angelegtem Vakuum fließt und anschließend nachfolgend in Richtung der wenigstens einen Saugstelle verteilt wird, so dass das Fasermaterial (15) im Bereich zwischen Harzanguss (16) und der wenigstens einen Saugstelle vom Harz durchtränkt wird.

6. Verfahren nach einem der Ansprüche 1 bis 5, **dadurch gekennzeichnet, dass** zwischen zwei, vorzugsweise mit jeweils semipermeablen Membranen (21) ausgebildeten, Saugstellen Harz über den Harzanguss (16) in das Fasermaterial (15) gegeben wird.

## Claims

1. A method of producing a fibre reinforced belt (3a, 3b) of a rotor blade (1) of a wind energy installation from a dry fibre material (15), wherein
- the fibre material (15) is disposed in a recess (11) in a mould (10) on a distribution aid (14),
- the recess (11) is sealed at the upper end from the external environment by means of a cover (17), wherein the sealed cavity (19) is placed under vacuum,
- resin is supplied directly to the upper surface of the dry fibre material (15) at at least one position at a resin feeder (16) on the upper side of the fibre material (15) into the fibre material (15), so that the resin enters directly from the resin feeder (16) into the fibre material (15), wherein the resin is supplied via one or more passages (27) formed in the fibre material (15), so that the resin is conducted to the distribution aid (14) via the passage or passages (27), and the resin supplied into the fibre material (15) flows to the distribution aid (14) disposed beneath the fibre material (15) when a vacuum is applied in the cavity (19).

2. A method as claimed in Claim 1, **characterised in that** the, preferably dry, fibre material is acted on by vacuum by means of at least one or more vacuum suction devices, which are disposed on the side of the fibre material remote from the distribution aid (14).

3. A method as claimed in Claim 1 or 2, **characterised in that** the vacuum is applied in the cavity (19) via at least one semi-permeable membrane (21) in or on the cover (17).

4. A method as claimed in one of Claims 1 to 3, **characterised in that** the resin is distributed laterally by means of a distribution aid (14) at the bottom so that the edge region or regions of the fibre material (15) are impregnated by the resin.

5. A method as claimed in one of Claims 1 to 4, **characterised in that** the resin is supplied via the resin feeder (16) into the fibre material (15) adjacent at least one suction point on the same side of the resin feeder (16), which is spaced from the resin feeder (15) and is preferably constructed with respective semi-permeable membranes (21), whereby, in particular, the resin supplied into the fibre material (15) flows to the distribution aid (14) disposed beneath the fibre material (15), when vacuum is applied, and is subsequently distributed in the direction of the at least one suction point so that the fibre material (15) is impregnated in the region between the resin feeder (16) and the at least one suction point by the resin.

6. A method as claimed in one of Claims 1 to 5, **characterised in that** resin is supplied via the resin feeder (16) into the fibre material (15) between two suction points, which are preferably constructed with respective semi-permeable membranes (21).

## Revendications

1. Procédé pour fabriquer un longeron (3a, 3b) renforcé de fibres d'une pale de rotor (1) d'une installation éolienne à base d'un matériau fibreux sec (15), dans lequel
- le matériau fibreux (15) est disposé ou apte à être disposé dans une cavité (11) d'un moule (10) sur un système d'aide à l'écoulement (14),
- la cavité (11) est étanchéifiée, ou destinée à être étanchéifiée, sur le côté supérieur par rapport à l'environnement extérieur au moyen d'un recouvrement (17), l'espace intérieur (19) étanchéifié étant placé sous vide ou apte à être placé sous vide,
- de la résine est amenée directement sur le côté supérieur du matériau fibreux sec (15) en au moins un emplacement sur un canal de coulée de résine (16) dans le matériau fibreux (15), de sorte que la résine provenant directement du canal de coulée de résine (16) entre dans le matériau fibreux (15), **caractérisé en ce que** la résine est apportée grâce à un ou plusieurs canaux (27) formés dans le matériau fibreux (15), de sorte que la résine est guidée à travers le canal ou les canaux (27), à titre de système d'aide à l'écoulement (14), et que la résine apportée dans le matériau fibreux (15) circule vers le système d'aide à l'écoulement (14) disposé sous le matériau fibreux (15) lorsque le vide est réalisé dans l'espace intérieur (19).

2. Procédé selon la revendication 1, **caractérisé en ce que** le matériau fibreux (15), de préférence sec, est appliqué par du vide au moyen d'au moins un ou plusieurs dispositifs d'aspiration par vide, qui sont disposés sur un côté, opposé au système d'aide à l'écoulement (14), du matériau fibreux (15).

3. Procédé selon la revendication 1 ou la revendication 2, **caractérisé en ce que** le vide est créé au moyen d'au moins une membrane (21) semi-perméable dans le ou sur le recouvrement (17) dans l'espace intérieur (19).

4. Procédé selon l'une des revendications 1 à 3, **caractérisé en ce que** la résine est répartie vers le côté au moyen d'un système d'aide à l'écoulement (14) côté inférieur, de sorte que la ou les zones de bordure du matériau fibreux (15) sont imbibées par la résine.

5. Procédé selon l'une des revendications 1 à 4, **caractérisé en ce que** de la résine est amenée par un culot d'injection de résine (16) dans le matériau fibreux (15) à côté d'au moins un point d'aspiration, espacé du culot d'injection de résine (15), conçu de préférence avec des membranes (21) respectivement semi-perméables, sur le même côté du culot d'injection de résine (16), la résine introduite dans le matériau fibreux (15) circulant en particulier vers le système d'aide à l'écoulement (14) disposé sous le matériau fibreux (15) lorsque le vide est appliqué et réparti ensuite de façon consécutive en direction du au moins un point d'aspiration, de sorte que le matériau fibreux (15) est imbibé par la résine dans la zone entre le culot d'injection de résine (16) et le au moins un point d'aspiration.

6. Procédé selon l'une des revendications 1 à 5, **caractérisé en ce que** de la résine est amenée au moyen d'un culot d'injection de résine (16) dans le matériau fibreux (15) entre deux points d'aspiration, réalisé de préférence avec des membranes (21) respectivement semi-perméables.
